# EUROPÄISCHE PATENTANMELDUNG

(11) **EP 2 845 661 A1**
(43) Veröffentlichungstag der Anmeldung: **11.03.2015**
(21) Anmeldenummer: 13183743.7
(22) Anmeldetag: 10.09.2013
(51) Int. Cl.: B21D 5/00, B21D 5/02

(54) **Verfahren zum Biegen eines Werkstückes**

(71) Anmelder: Bystronic Laser AG, 3362 Niederönz (CH)
(72) Erfinder: Jost, Stefan, 4556 Aeschi (CH)
(74) Vertreter: Patentbüro Paul Rosenich AG

(57) **Zusammenfassung**

Ein Verfahren und eine Vorrichtung zum Biegen eines Werkstückes (3) gemäss einem vorgebbaren Biegeprozess sind derart gestaltet, dass das Werkstück (3) mit einer einen bestimmten Biegeprozess codierenden maschinenlesbaren Kennzeichnung (4) versehen wird. Diese Kennzeichnung (4) wird maschinenunterstützt eingelesen und dann ein der Kennzeichnung entsprechender Biegeprozesses in die Steuerung der Biegemaschine (5) geladen. Die Kennzeichnung (4) wird dabei durch Veränderung zumindest der Oberfläche des Werkstücks (3) unverlierbar aufgebracht.

## Beschreibung

Die Erfindung betrifft ein Verfahren zum Biegen eines Werkstückes nach dem Oberbegriff des Anspruchs 1, sowie eine Anlage zum Schneiden und Biegen von Werkstücken nach dem Oberbegriff des Anspruchs 8 sowie ein Computerprogrammprodukt nach dem Oberbegriff des Anspruchs 13.

Typischerweise wird im Rahmen eines Verfahrens zum Biegen eines Werkstückes dieses mit einem Code versehen, der für einen bestimmten Biegeprozess charakteristisch ist. Vorzugsweise ist dabei eine maschinenlesbare Kennzeichnung vorgesehen, um im Rahmen der Herstellung des Biegeteils das maschinenunterstützte Einlesen der Kennzeichnung, das vorzugsweise automatische Laden des der Kennzeichnung entsprechenden Biegeprozesses in die Steuerung der Biegemaschine und das anschliessende Biegen des Werkstücks gemäss dem geladenen Biegeprozess rasch und fehlerfrei zu ermöglichen. Meist wird an der Biegemaschine von einer aufgeklebten Etikette mit einem Handscanner diese Kennzeichnung eingelesen und wird das entsprechende Biegeprogramm aufgerufen.

Das Biegeteil wird meist durch ein 3D-File beschrieben, das durch ein im Prinzip beliebiges CAD System erzeugt wurde. Nach dem Einlesen dieser Daten in eine Steuerungssoftware für die Anlage zum Schneiden und Biegen (Schneid-/Biegeanlage) werden daraus in mehreren Schritten maschinenlesbare Produktions-Files erzeugt, insbesondere für die Biegemaschine, nachdem eine entsprechende Biegetechnologie zugewiesen wurde. Es werden oftmals auch zusätzliche Arbeitspapiere (u.a. Etiketten) ausgegeben, die eine Identifizierung der Teile an der Biegemaschine erleichtern.

Die oben beschriebene herkömmliche Prozesskette ist nicht durchgängig prozesssicher aufgebaut. So birgt die Identifikation der Teile mittels Etiketten oder Begleitpapieren die Gefahr von Vertauschungen oder Fehlkennzeichnungen in sich, sowohl beim Aufbringen von Etiketten an den zu biegenden Werkstücken oder auch beim Identifizieren anhand von Begleitpapieren an der Biegepresse.

Aufgabe der vorliegenden Erfindung ist es somit, das Verfahren sowie die Anlage zum Schneiden und Biegen von Werkstücken für einen prozesssicheren Ablauf zu gestalten und die Gefahr von Vertauschungen oder fehlerhafter Kennzeichnung von Werkstücken weitestgehend zu verringern. Eine weitere Aufgabe ist es, das Verfahren und die Anlage derart auszuführen, dass für den Benutzer ein vereinfachter Bedienungsablauf mit verschiedenen Stufen der Automatisierung zur Verfügung gestellt wird.

Die Aufgabe wird durch die Merkmale der unabhängigen Ansprüche 1, 8 und 13 gelöst. Vorteilhafte Weiterbildungen sind in den Figuren und in den abhängigen Patentansprüchen dargelegt.

Gemäss der Erfindung ist das Verfahren zum Biegen eines Werkstückes gemäss einem vorgebbaren Biegeprozess wie oben erläutert dadurch gekennzeichnet, dass die Kennzeichnung durch Veränderung zumindest der Oberfläche des Werkstücks unverlierbar aufgebracht wird. Damit ist nach der ersten Kennzeichnung des Werkstücks ohne grösseren Aufwand keine willkürliche oder auch ungewollte Veränderung oder Entfernung der Kennzeichnung mehr möglich. Verwechslung oder Vertauschung von Kennzeichnungen sind daher so gut wie ausgeschlossen, so dass jedes Werkstück sicher gemäss dem durch die Kennzeichnung charakterisierten Biegeprozess verarbeitet wird.

Vorzugsweise wird das Werkstück vor Durchlaufen des Biegeprozesses zugeschnitten und wird die Kennzeichnung im Zuge des Schneidevorganges aufgebracht. Damit kann ein zusätzlicher Arbeitsschritt für das Aufbringen der Kennzeichnung eingespart werden.

Besonders bevorzugt ist dabei vorgesehen, dass das Zuschneiden des Werkstücks durch Laserschneiden und/oder Wasserstrahlschneiden gemäss einem Schneidplan erfolgt, der in Abhängigkeit vom Biegeprozess vorzugsweise automatisch erstellt wird, wobei das Aufbringen der Kennzeichnung in den Schneidplan integriert ist. Auch hier ist wieder ein zusätzlicher Arbeitsschritt für das Aufbringen der Kennzeichnung eingespart, wobei mit Integration dieses Arbeitsschrittes in den Schneidplan eine weitestgehende Automatisierung und damit Fehlerfreiheit gewährleistet ist.

Gemäss einer weiteren Ausführungsform der Erfindung wird die Kennzeichnung vorzugsweise als zweidimensionaler Array-Code durch Laserbeschriftung, vorzugsweise durch Lasergravur, oder durch Wasserstrahlbeschriftung aufgebracht. Damit ist eine Kennzeichnung mit optimalem Verhältnis von Informationsgehalt zu Dimension gegeben, die auch einfach und in bewährter Weise mittels der herkömmlichen, auch zum Laserschneiden oder zum Wasserstrahlschneiden eingesetzten Maschinen hergestellt werden kann.

Vorzugsweise erfolgt die Codierung und Erstellung eines Herstellungsplans für die Kennzeichnung automatisch in Abhängigkeit vom gewählten Biegeprogramm. Dazu sind in einer Datenbank die für die jeweilige Biegepresse verfügbaren Biegeprogramme und deren Kodierung abgelegt. Je nach dem gewählten Biegeprogramm wird dann die Kodierung abgerufen und automatisch und damit weitestgehend fehlerfrei in einen Herstellungsplan für die Kennzeichnung umgesetzt, ähnlich der Erstellung eines Schneidplans für mittels Laser, Wasserstrahl oder dergleichen zu schneidende Werkstücke.

Besonders bevorzugt ist dabei in jedem Schneidplan für jedes Werkstück dieses Schneidplans ein Platzhalter für die Kennzeichnung vorhanden. Damit kann im Rahmen der Erstellung des Schneidplans bereits automatisch die die Anbringung der Kennzeichnung berücksichtigt werden.

Gemäss einer weiteren vorzugsweisen Variante des Verfahrens ist vorgesehen, dass aus einem das fertige Werkstück beschreibenden Datensatz vorzugsweise automatisch ein Biegeprozess und gegebenenfalls auch ein Schneidplan erstellt wird. Aus dem das Biegeteil elektronisch beschreibende 3D-File können vorzugsweise zwei maschinenlesbare Produktions-Files erzeugt werden, einerseits für die Schneidmaschine, bspw. eine Lasermaschine und/oder eine Wasserstrahlschneidmaschine, (z. B. in Form eines NCP-Files) und andererseits für die Biegemaschine. Dabei wird vorzugsweise aus dem 3D-File ein flaches Teil entwickelt (Unfold-Vorgang). Für die Biegemaschine wird in einem weiteren Schritt die entsprechende Biegetechnologie zugewiesen und das entsprechende Steuer-File erzeugt. Für die Lasermaschine bzw. die Wasserstrahlschneidmaschine wird die entsprechende Schneidtechnologie zugewiesen und es werden in einem weiteren Schritt die einzelnen Flachteile geschachtelt, d. h. so oft wie benötigt zusammen mit weiteren Flachteilen in einem Schneidplan zusammengefasst, und das NCP-File erzeugt. Mit der Integration des Aufbringens der Kennzeichnung in den Schneidplan ist vorteilhafterweise ein weiterer manueller und potentiell unsicherer Benutzereingriff vermeidbar.

Eine Anlage zum Schneiden und Biegen von Werkstücken, umfasst eine Schneidmaschine, vorzugsweise eine Lasermaschine oder eine Wasserstrahlschneidmaschine. Diese weisen eine eigentliche Schneidvorrichtung und eine Steuerung auf, in welche ein Schneidplan geladen werden kann. Die Anlage umfasst weiters eine Biegemaschine, umfassend eine Biegepresse und eine gegebenenfalls separate Steuerung, in welche ein Biegeprozess geladen werden kann. Vorzugsweise ist auch eine Eingabevorrichtung für einen Code zur Charakterisierung eines vordefinierten Biegeprozesses vorhanden. Auch eine übergeordnete Steuerung könnte vorhanden sein. Gekennzeichnet ist diese Anlage erfindungsgemäss dadurch, dass die Schneidmaschine zur Aufbringung einer codierenden unverlierbaren Kennzeichnung des Werkstücks durch Veränderung zumindest der Oberfläche des Werkstücks ausgelegt ist. Gemäss einer bevorzugten Ausführungsform dieser Anlage ist vorgesehen, dass in einer der Steuerungen ein Ablauf zum Generieren eines den gewählten Biegeprozess charakterisierenden Codes, vorzugsweise eines zweidimensionalen Array-Codes, implementiert ist. Dies kann vorzugsweise als mittels eines in die Steuerung geladenen Computerprogrammproduktes gelöst sein. In einer der Steuerungen ist ein Ablauf zur Erstellung eines Schneidplans für die Schneidmaschine und zur Ansteuerung der Schneidmaschine zur Aufbringung einer den Code enthaltenden Kennzeichnung implementiert. Auch diese Implementierung ist vorzugsweise als in die Steuerung geladenes Computerprogrammprodukt bewerkstelligt.

Besonders vorteilhaft ist eine Anlage gemäss den beiden vorigen Absätzen mit einer Biegemaschine ausgeführt, die eine Biegepresse und eine Steuerung für diese Biegepresse umfasst, in welche Steuerung ein Biegeprozess geladen werden kann. Diese Biegemaschine weist weiters eine Eingabevorrichtung für einen Code auf, der einem bestimmten Biegeprozess zugeordnet ist. In der Steuerung der Biegemaschine ist Ablauf implementiert, der in Abhängigkeit von dem eingegebenen Code einen Biegeprozess in die Steuerung lädt. Diese Implementierung erfolgt vorzugsweise über ein in die Steuerung geladenes Computerprogrammprodukt.

Gemäss einer weiteren Ausführungsform der Erfindung ist die Eingabevorrichtung ein Scanner für maschinenlesbare Kennzeichnungen. Vorzugsweise ist ein frei beweglicher Handscanner vorgesehen, der einfach und flexibel einsetzbar und allenfalls über ein Datenkabel mit der Steuerung verbunden ist. Alternativ dazu kann auch ein ortsfest montierter Scanner vorgesehen sein, an welchem im Rahmen des Transportes der Werkstücke zur Biegepresse die Werkstücke vorbeibewegt werden und welcher dabei die Daten ausliest. Anstelle eines Scanners kann auch ein anderes Lesegerät eingesetzt werden, welches zur Erfassung der maschinenlesbaren Kennzeichnungen geeignet ist. Beispiele hierfür sind Kameras, Mustererkennungsvorrichtungen, od. dgl.

Wenn ein erfindungsgemässes Computerprogrammprodukt mit Anweisungen zum Versehen eines Werkstückes für einen Biegeprozess mit einer einen bestimmten Biegeprozess codierenden maschinenlesbaren Kennzeichnung vorliegt, wobei die Anweisungen bei Ausführung durch einen Prozessor zur Ausführung des weiter oben beschriebenen Verfahrens ausgelegt sind, können Biegemaschinen oder Anlagen zum Schneiden und Biegen für das erfindungsgemässe Verfahren einfach und rasch adaptiert und auch betreffend die Software einfach gewartet werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile.

Es zeigen dabei:

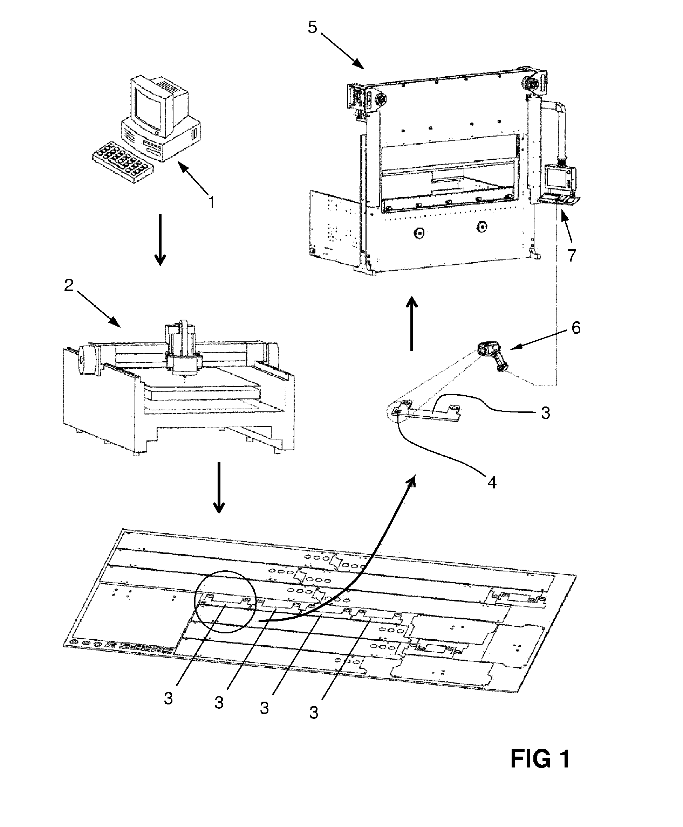

- Fig. 1: schematisch einen erfindungsgemässen Verfahrensablauf für die Erkennung, Kennzeichnung und Identifikation an der Biegepresse eines herzustellenden Biegeteils,
- Fig. 2: einen Ausschnitt aus einem Schneidplan mit mehreren zuzuschneidenden Teilen mit jeweils einem Platzhalter für eine Kennzeichnung.
- Fig. 3: eine Draufsicht auf ein Kennzeichnung

Am Beginn der Prozesskette Schneiden-Biegen steht ein 3D-File, welches durch ein beliebiges CAD-System erzeugt werden kann und welches das Biegeteil elektronisch beschreibt. Dieses 3D-File wird in eine Software eingelesen, welche zur Erstellung von Schneidplänen sowie Biegeprogrammen ausgelegt ist und überdies die Fertigungsprozesse planen und überwachen kann. Diese Software kann in einer der Steuerungen der Anlage zum Schneiden und Biegen integriert sein, kann aber auch auf einem separaten Rechner 1 laufen. Auch die Wahl der zum Biegeteil passenden Schneidtechnologien und Biegeprozesse können gegebenenfalls simuliert und kontrolliert werden. Vorzugsweise werden in dieser Software zwei maschinenlesbare Produktions-Files erzeugt, einerseits für eine Schneidmaschine (NCP-File), z. B. Lasermaschine 2, und andererseits für eine Biegemaschine 5.

Dabei wird aus dem 3D-File ein flaches Teil entwickelt, wird der Lasermaschine 2 die entsprechende Schneidtechnologie zugewiesen und werden in einem weiteren Schritt die einzelnen Flachteile (Werkstück 3) geschachtelt, d.h. so oft wie benötigt zusammen mit weiteren Flachteilen (Werkstücke 3) in einem Schneidplan zusammengefasst und das NCP-File erzeugt. Im gleichen Schritt können zusätzliche Arbeitspapiere (u.a. Etiketten) ausgegeben werden, die eine Identifizierung der Werkstücke 3 an der Biegemaschine 5 erleichtern. Das NCP-File wird von der Lasermaschine 2 übernommen, die Werkstücke 3 geschnitten, die Werkstücke 3 entnommen und die Werkstücke 3 zur Weiterverarbeitung kommissioniert, z.B. gestapelt auf Paletten oder in Containern, für die Weiterverarbeitung an der Biegepresse.

Um die Prozesskette Schneiden-Biegen durchgängig prozesssicher gestalten zu können, d. h. die fehleranfällige Identifikation der Werkstücke 3 von Hand mittels Etiketten oder Begleitpapieren zu vermeiden, werden die Werkstücke 3 im Rahmen des Schneidevorgangs gleich mit einer unverlierbaren Kennzeichnung 4 versehen. Diese Kennzeichnung 4 ist ein umgesetzter Maschinencode (NCP-File) und wird vorzugsweise direkt von der Lasermaschine 2 auf das Werkstück 3 graviert, beispielsweise im Körner-Verfahren, oder auch, wenn die Gestaltung der Kennzeichnung 4 dies zulässt, in dieses Werkstück 3 eingeschnitten. Die Schneidmaschine, z. B. die Lasermaschine 2, ist dieser Aufgabe der Aufbringung einer codierenden unverlierbaren Kennzeichnung 4 des Werkstücks 3 durch Veränderung zumindest der Oberfläche des Werkstücks 3 entsprechend ausgelegt.

Auch der Schneidplan wird vorzugsweise in Abhängigkeit vom Biegeprozess und vorzugsweise automatisch erstellt, wobei das Aufbringen der Kennzeichnung 4 vorzugsweise in den Schneidplan integriert ist. Dabei umfasst die Anlage zum Schneiden und Biegen von Werkstücken 3 neben der Biegemaschine 5 eben auch eine Schneidmaschine, vorzugsweise eine Lasermaschine 2, mit einer eigentlichen Schneidvorrichtung und einer Steuerung, in welche ein Schneidplan geladen werden kann. Gegebenenfalls gibt es noch eine sowohl der Schneidmaschine 2 als auch der Biegemaschine 5 übergeordnete Steuerung, die das gegenseitige Zusammenspiel dieser Maschinen 2, 5 als auch den Transport der Werkstücke 3 zu und zwischen den Maschinen 2, 5 steuert. In zumindest einer der Steuerungen ist der Ablauf zum Generieren eines den gewählten Biegeprozess charakterisierenden Codes implementiert, vorzugsweise in Form einer entsprechenden Software, welche in die Steuerung geladen ist oder zumindest temporär geladen werden kann. In gleicher Weise ist, als dauerhafte oder temporär ladbare Software, der Ablauf zur Erstellung eines Schneidplans für die Schneidmaschine 2 implementiert, welcher vorzugsweise gleich die Ansteuerung der Schneidmaschine 2 zur Aufbringung einer den Code enthaltenden Kennzeichnung 4 enthält.

Vor oder während des Transportes des geschnittenen Werkstücks 3 zur und in die Biegepresse 5 wird die unmittelbar auf dem Werkstück 3 unverlierbar und unveränderbar aufgebrachte Kennzeichnung 4 abgelesen. Vorzugsweise wird dabei als Eingabevorrichtung ein Handscanner 6 eingesetzt. Dessen Verbindung mit der Steuerung der Biegemaschine 5 ist durch eine strichlierte Linie symbolisiert, wobei diese Verbindung kabellos (wireless) oder ein Übermittlungskabel ist. Die angelieferten Teile bzw. Werkstücke 3 können damit eindeutig identifiziert werden, und es kann das für diese Werkstücke 3 vorgesehene und passende Biegeprogramm aufgerufen oder geladen werden, um damit die 3D-Biegeteile fertigzustellen. Dabei wird eine Auswahl aus den vorab erstellten Produktions-Files für die Biegemaschine 5 oder aus einer Datenbank mit unterschiedlichen Biegeprogrammen getroffen.

Die Biegemaschine 5 zur Umformung eines Werkstücks 3, welche insbesondere die Biegepresse und eine Steuerung 7 für diese Biegepresse umfasst, in welche Steuerung ein Biegeprozess geladen werden kann, weist dabei eine Eingabevorrichtung für einen Code auf, der einem bestimmten Biegeprozess zugeordnet ist. In der Steuerung ist ein Ablauf implementiert, vorzugsweise als in die Steuerung geladenes Computerprogrammprodukt, der in Abhängigkeit von dem eingegebenen Code einen Biegeprozess in die Steuerung 7 lädt. Alternativ kann der Scanner aber auch eine Anzeigeeinrichtung für die abgelesene Kennzeichnung 4 aufweisen, die dann über andere Bedienelemente, beispielsweise eine Tastatur oder fest programmierte Tasten, bspw. von einem Maschinenbediener eingegeben wird. Auch ein ortsfest positionierter Scanner ist denkbar, an welchem die Werkstücke 3 im Zuge des Transportes zur und in die Biegepresse vorbeitransportiert werden, wobei beim Passieren des Scanners die Kennzeichnung 4 jedes Werkstücks 3 abgelesen wird. Dies hat den Vorteil, dass nicht auf das Erfassen der Kennzeichnung 4 vergessen werden bzw. ein vielleicht nicht weiter zu verarbeitendes Werkstück 3 nicht gescannt werden kann.

Durch das Einlesen der Kennzeichnung 4 direkt vom Werkstück 3 und den Aufruf des dadurch kodierten Biegeprogramms steht dieses automatisch und korrekt zugeordnet für den anschliessenden Biegeprozess bereit. Die Prozesskette ist somit durchgängig prozesssicher aufgebaut. Selbstverständlich ist die Aufbringung einer unverlierbaren und einen nachfolgenden Produktionsprozess charakterisierenden Kennzeichnung 4 nicht auf Werkstücke 3 eingeschränkt, die erst im Rahmen des Produktionsprozesses zugeschnitten werden. Auch bereits zugelieferte Werkstücke aus anderen Quellen können durch Laserschneiden, Lasergravieren, Wasserstrahlschneiden oder ähnliche Bearbeitungsschritte mit einer unverlierbaren und den weiteren Produktionsprozess kodierenden Kennzeichnung versehen werden.

Für die Kennzeichnung 4 wird vorteilhafterweise ein zweidimensionaler Array-Code verwendet, da diese ein optimales Verhältnis von Informationsgehalt zu Dimension aufweisen. Überdies ist ein derartiger Code einfach durch auch zum Laserschneiden oder Wasserstrahlschneiden eingesetzten Maschinen herstellbar.

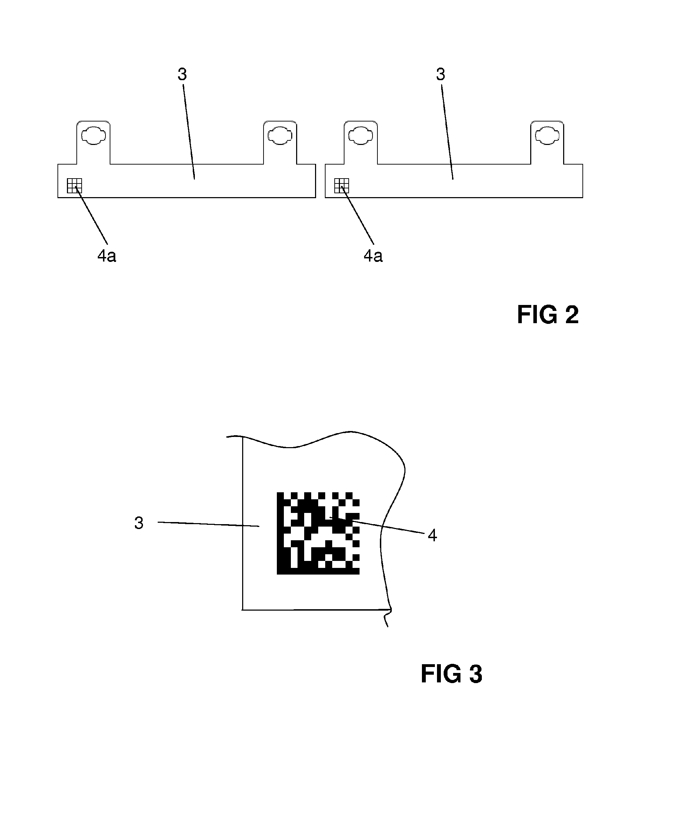

Eine weitere vorteilhafte Abwandlung des erfindungsgemässen Verfahrens sieht die Codierung und Erstellung eines Herstellungsplans für die Kennzeichnung 4 automatisch in Abhängigkeit vom erstellten bzw. gewählten Biegeprogramm vor. Das Biegeprogramm kann beispielsweise aus einer Datenbank der für die jeweilige Biegepresse verfügbaren Biegeprogramme und deren Kodierung ausgewählt werden. Abhängig vom gewählten Biegeprogramm wird die zugeordnete Kodierung abgerufen und vorzugsweise automatisch gleich in einen Herstellungsplan für die Kennzeichnung 4 umgesetzt. Dabei kann bereits in jedem Schneidplan für jedes Werkstück 3 dieses Schneidplans ein Platzhalter 4a für die Kennzeichnung 4 vorhanden sein (siehe dazu Fig. 2).

Bei entsprechend ausgelegten Steuerungen von Biegemaschine 5 und Schneidmaschine 2 können diese auch nachträglich zur Ausführung der oben beschriebenen Abläufe nachgerüstet werden. Dazu wird zumindest die die Code-Generierung und Code-Aufbringung steuernde Software in Form eines ladbaren und/oder speicherbaren Computerprogrammproduktes von einem Speichermedium oder einer externen Datenquelle in die entsprechende Steuerung der zur Anwendung kommenden Maschine geladen und stellt dort die Anweisungen zum Versehen eines Werkstückes 3 für einen Biegeprozess mit einer einen bestimmten Biegeprozess codierenden maschinenlesbaren Kennzeichnung 4 zur Verfügung. Auch in der Biegemaschine 5 kann in entsprechender Weise ein Computerprogrammprodukt mit Anweisungen zum Einlesen eines Codes eingelesen und gegebenenfalls gespeichert werden, das die Anweisungen zur Durchführung eines bestimmten Biegeprozesses in Abhängigkeit von der eingelesenen Kennzeichnung in die Steuerung 7 einer Biegemaschine 5 lädt.

Die aufgebrachte Kennzeichnung 4 kann auch für beliebige andere Produktprozesse genutzt werden und bietet dabei in jedem Fall die Vorteile der Rückverfolgbarkeit des Werkstücks 3 bis hin zur Erstellung der Produktions-Files, des Up-/Downstream Trackings und einer Verbesserung des CRM (Customer-Relationship-Management).

### Bezugszeichenliste

- 1: Rechner
- 2: Schneidmaschine/Lasermaschine
- 3: Werkstück
- 4: Kennzeichnung
- 4a: Platzhalter für Kennzeichnung
- 5: Biegemaschine
- 6: Scanner
- 7: Steuerung für Biegemaschine 5

## Patentansprüche

1. Verfahren zum Biegen eines Werkstückes(3) gemäss einem vorgebbaren Biegeprozess, umfassend das Versehen des Werkstückes (3) mit einer einen bestimmten Biegeprozess codierenden maschinenlesbaren Kennzeichnung (4), maschinenunterstütztes Einlesen der Kennzeichnung (4), Laden des der Kennzeichnung (4) entsprechenden Biegeprozesses in die Steuerung (7) einer Biegemaschine (5) und anschliessendes Biegen des Werkstücks (3) gemäss dem geladenen Biegeprozess, **dadurch gekennzeichnet, dass** die Kennzeichnung (4) durch Veränderung zumindest der Oberfläche des Werkstücks (3) unverlierbar aufgebracht wird.

2. Verfahren nach Anspruch 1, **dadurch gekennzeichnet, dass** das Werkstück (3) vor Durchlaufen des Biegeprozesses zugeschnitten und die Kennzeichnung (4) im Zuge des Schneidevorganges aufgebracht wird.

3. Verfahren nach Anspruch 1 oder 2, **dadurch gekennzeichnet, dass** das Zuschneiden des Werkstücks (3) durch Laserschneiden und/oder durch Wasserstrahlschneiden gemäss einem Schneidplan erfolgt, der in Abhängigkeit vom Biegeprozess vorzugsweise automatisch erstellt wird, wobei das Aufbringen der Kennzeichnung (4) in den Schneidplan integriert ist.

4. Verfahren nach Anspruch 2 und 3, **dadurch gekennzeichnet, dass** die Kennzeichnung (4) vorzugsweise als zweidimensionaler Array-Code durch Laserbeschriftung, vorzugsweise durch Lasergravur, oder Wasserstrahlbeschriftung aufgebracht wird.

5. Verfahren nach einem der Ansprüche 1 bis 4, **dadurch gekennzeichnet, dass** die Codierung und Erstellung eines Herstellungsplans für die Kennzeichnung (4) automatisch in Abhängigkeit vom gewählten Biegeprogramm erfolgt.

6. Verfahren nach einem der Ansprüche 3 bis 5, **dadurch gekennzeichnet, dass** in jedem Schneidplan für jedes Werkstück (3) dieses Schneidplans ein Platzhalter (4a) für die Kennzeichnung (4) vorhanden ist.

7. Verfahren nach einem der Ansprüche 1 bis 6, **dadurch gekennzeichnet, dass** aus einem das fertige Werkstück (3) beschreibenden Datensatz vorzugsweise automatisch ein Biegeprozess und gegebenenfalls auch ein Schneidplan erstellt wird.

8. Anlage zum Schneiden und Biegen von Werkstücken (3), umfassend eine Schneidmaschine (2), vorzugsweise eine Lasermaschine oder Wasserstrahlschneidmaschine, umfassend eine Schneidvorrichtung und eine Steuerung, in welche ein Schneidplan geladen werden kann; eine Biegemaschine (5), umfassend eine Biegepresse und eine gegebenenfalls separate Steuerung (7), in welche ein Biegeprozess geladen werden kann, vorzugsweise mit einer Eingabevorrichtung für einen Code zur Charakterisierung eines vordefinierten Biegeprozesses; und gegebenenfalls eine übergeordnete Steuerung, **dadurch gekennzeichnet, dass** die Schneidmaschine (2) zur Aufbringung einer codierenden unverlierbaren Kennzeichnung (4) des Werkstücks (3) durch Veränderung zumindest der Oberfläche des Werkstücks (3) ausgelegt ist.

9. Anlage nach Anspruch 10, **dadurch gekennzeichnet, dass** in einer der Steuerungen ein Ablauf zum Generieren eines den gewählten Biegeprozess charakterisierenden Codes, vorzugsweise eines zweidimensionalen Array-Codes, implementiert ist, vorzugsweise als in die Steuerung geladenes Computerprogrammprodukt, und in einer der Steuerungen ein Ablauf zur Erstellung eines Schneidplans für die Schneidmaschine und zur Ansteuerung der Schneidmaschine (2) zur Aufbringung einer den Code enthaltenden Kennzeichnung (4) implementiert ist, vorzugsweise als in die Steuerung geladenes Computerprogrammprodukt.

10. Anlage nach Anspruch 8 oder 9, **dadurch gekennzeichnet, dass** die Biegemaschine (5) eine Biegepresse und eine Steuerung für diese Biegepresse umfasst, in welche Steuerung ein Biegeprozess geladen werden kann, sowie eine Eingabevorrichtung für einen Code vorgesehen ist, der einem bestimmten Biegeprozess zugeordnet ist, und in der Steuerung (7) der Biegemaschine (5) ein Ablauf implementiert ist, vorzugsweise als in die Steuerung (7) der Biegemaschine (5) geladenes Computerprogrammprodukt, der in Abhängigkeit von dem eingegebenen Code einen Biegeprozess in die Steuerung (7) der Biegemaschine (5) lädt.

11. Anlage nach Anspruch 10, **dadurch gekennzeichnet, dass** die Eingabevorrichtung ein Scanner für maschinenlesbare Kennzeichnungen (4) ist, vorzugsweise ein frei beweglicher Handscanner (6), der allenfalls über ein Datenkabel mit der Steuerung verbunden ist.

12. Anlage nach einem der Ansprüche 8 bis 11, **dadurch gekennzeichnet, dass** in einer der Steuerungen ein Ablauf implementiert ist, vorzugsweise als in die Steuerung geladenes Computerprogrammprodukt, der aus einem das fertige Werkstück (3) beschreibenden Datensatz einen Biegeprozess und gegebenenfalls auch einen Schneidplan erstellt, und welcher Ablauf die automatische Codierung und Erstellung eines Herstellungsplans für die Kennzeichnung (4) in Abhängigkeit vom gewählten Biegeprogramm vorsieht, wobei gegebenenfalls das Aufbringen der Kennzeichnung (4) in den Schneidplan integriert ist.

13. Computerprogrammprodukt mit Anweisungen zum Versehen eines Werkstückes (3) für einen Biegeprozess mit einer einen bestimmten Biegeprozess codierenden maschinenlesbaren Kennzeichnung (4), wobei die Anweisungen bei Ausführung durch einen Prozessor zur Ausführung eines Verfahrens nach den Ansprüchen 1 bis 7 ausgelegt sind.
